# EUROPÄISCHE PATENTSCHRIFT

(11) **EP 0 660 498 B1**
(45) Veröffentlichungstag und Bekanntmachung des Hinweises auf die Patenterteilung: **19.03.2003**
(21) Anmeldenummer: 94120245.9
(22) Anmeldetag: 20.12.1994
(51) Int. Cl.: H02M 7/217, H01L 25/18, H01L 25/07

(54) **Vorrichtung und Verfahren zur Umformung von Drehstrom in Gleichstrom**
Device and method for transforming three-phase AC current into DC current
Dispositif et méthode pour la transformation de courant alternatif triphasé en courant continu

(30) Priorität: 23.12.1993 AT 261293
(43) Veröffentlichungstag der Anmeldung: 28.06.1995
(73) Patentinhaber: IXYS Semiconductor GmbH, D-68623 Lampertheim (DE)
(72) Erfinder: Kolar, Johann W., A-1050 Wien (AT)
(74) Vertreter: Luderschmidt, Schüler & Partner GbR

(56) Entgegenhaltungen:
- EP-A- 0 427 143
- DE-A- 3 127 457
- DE-A- 3 241 508
- DE-A- 4 219 222
- PROCEEDINGS OF THE ANNUAL POWER ELECTRONICS SPECIALISTS CONFERENCE (PESC), SEATTLE, JUNE 20 - 25, 1993, Nr. CONF. 24, 20.Juni 1993, INSTITUTE OF ELECTRICAL AND ELECTRONICS ENGINEERS, Seiten 669-674, XP000399505 BIALOSKORSKI P ET AL: "UNITY POWER FACTOR THREE PHASE RECTIFIERS"
- PROCEEDINGS OF THE INDUSTRY APPLICATIONS SOCIETY ANNUAL MEETING, HOUSTON, OCT. 4 - 9, 1992, Bd. 1, 4.Oktober 1992, INSTITUTE OF ELECTRICAL AND ELECTRONICS ENGINEERS, Seiten 695-702, XP000368864 KUNIOMI OGUCHI ET AL: "A MULTILEVEL-VOLTAGE SOURCE RECTIFIER WITH A THREE-PHASE DIODE BRIDGE CIRCUIT AS A MAIN POWER CIRCUIT"

## Beschreibung

Die Erfindung betrifft eine Vorrichtung zur Umformung von Drehstrom- in Gleichstromenergie gemäß dem Oberbegriff des Patentanspruches 1. Außerdem bezieht sich die Erfindung auf ein Verfahren zur Steuerung und Regelung der Vorrichtung gemäß dem Oberbegriff des Patentanspruches 6.

Nach dem derzeitigen Stand der Technik wird zur Realisierung eines dreiphasigen Gleichrichtersystems bei Forderung nach regelbarer Ausgangsspannung, ohmschem Grundschwingungsnetzverhalten und geringer Oberschwingungsstrombelastung des Netzes eine selbstgeführte Drehstrom-Brückenschaltung mit wechselspannungsseitig vorgeschalteten Induktivitäten und gleichspannungsseitig angeordneter kapazitiver Glättung herangezogen. Die Ventile der Brückenschaltung werden über eine Kombination abschaltbarer Leistungshalbleiter und diesen antiparallel geschalteten Dioden gebildet. Bei ausschließlicher Betrachtung der Grundfunktion der Anordnung kann jeder Brückenzweig durch einen zweipoligen Umschalter zwischen positiver und negativer Schiene der Ausgangsgleichspannung ersetzt gedacht werden. Die Ansteuerung der Schalter erfolgt im einfachsten Fall nach dem Unterschwingungsverfahren, womit an der Eingangsseite der Brückenschaltung ein zur Netzspannung synchrones, aus sinusförmig pulsbreitenmodulierten Rechtecksignalen gebildetes Dreiphasen-Spannungssystem mit hohem Grundschwingungsanteil erzeugt wird. Die Amplitude der Gleichrichter-Phasenspannungen und deren Phasenlage gegenüber den Netzspannungen können über entsprechende Steuerung derart vorgegeben werden, daß aus der über den vorgeschalteten Induktivitäten auftretenden Differenz beider Spannungssysteme weitgehend sinusförmige, in Phase mit der Netzspannung liegende Netzströme resultieren. Als Nachteile dieses Konzeptes sind insbesondere der relativ hohe Ansteueraufwand und die bei höheren Ausgangsspannungen aufgrund der hohen Schaltverluste hochsperrender Ventile niedrige, bei vorgegebener zulässiger Oberschwingungsstrombelastung des Netzes zu hohen Induktivitätswerten der Vorschaltinduktivitäten bzw. hohem Volumen und Gewicht des Systems führende Taktfrequenz zu sehen.

Eine Vorrichtung gemäß dem Oberbegriff des Anspruchs 1 ist aus der DE-A1-42 19 222, insbesondere Fig. 16, bekannt. Im Gegensatz zum vorgenannten bekannten System mit abschaltbaren Leistungshalbleitern in der Drehstrom-Brückenschaltung weist die aus DE-Al-42 19 222 bekannte Vorrichtung eine Diodenbrücke auf. Der Leitzustand der Dioden wird durch elektronische Schalter und mit Hilfe gespeicherter elektrischer Energie gesteuert. Die Arbeitsweise einer solchen Anordnung sowie deren Vor- und Nachteile werden weiter unten im Rahmen der Beschreibung einer erfindungsgemäßen Vorrichtung erläutert. Insbesondere ist darauf hinzuweisen, daß die bekannte Vorrichtung einen durch Kondensatoren (Bezugszeichen 115 in Fig. 16) gebildeten Netzsternpunkt 114 aufweist, der mit einem Ausgangsspannungsmittelpunkt 113 verbunden ist. Diese Nachbildung eines Netzsternpunktes ist aufwendig und ist Ursache für relativ hohe Schaltverluste.

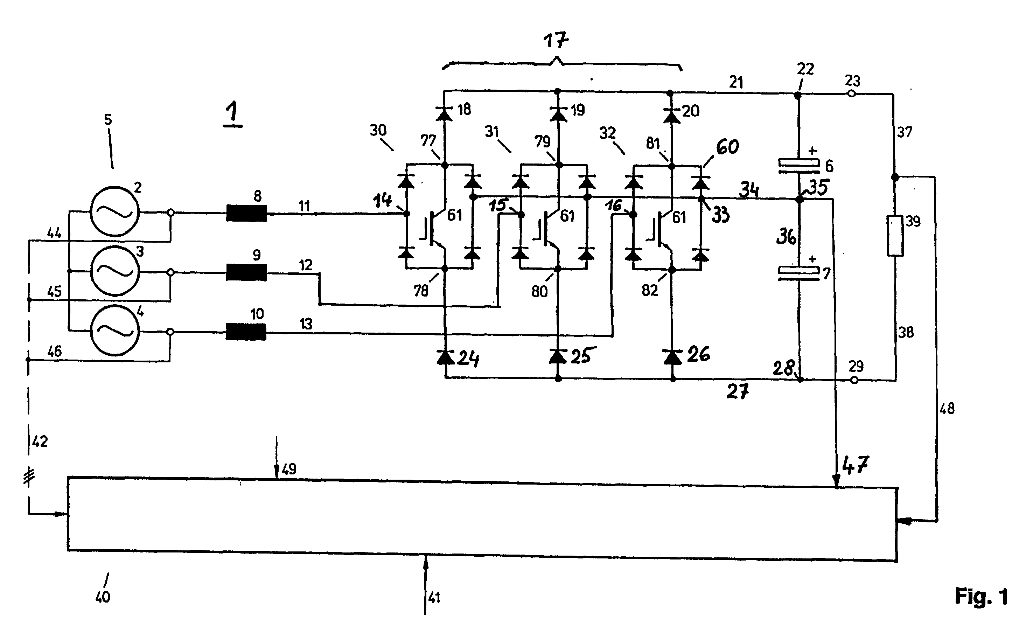

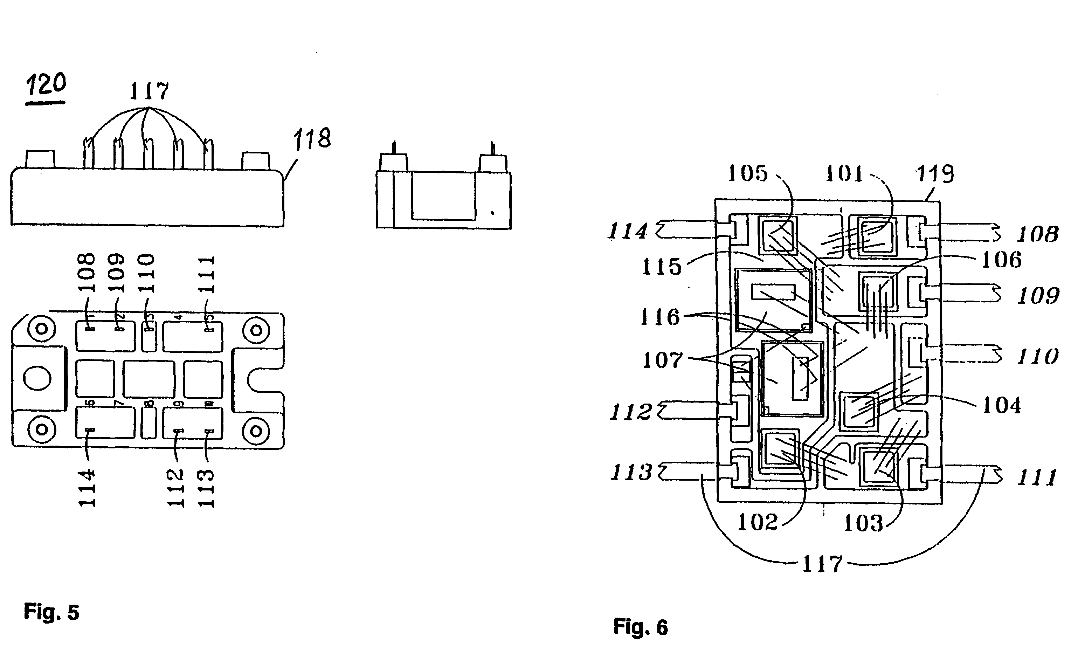

Ähnliche Vorrichtungen sind aus "Unity Power Factor three Phase Rectifiers" by Bialoskorski & Koczara in Proceedings of the 24th Annual IEEE Power Electronics Specialists Conference, June 20-25 1993, Seattle, USA, bekannt. Fig. 1 zeigt dort einen Dreiphasen-Zweipunkt-Gleichrichter in einer Dreieckschaltung, wobei drei elektronische Schalter vorhanden sind, die in einer Drehstrom-Diodenbrücke integriert sind. Eine ausgangsseitige Serienschaltung von Kondensatoren ist nicht vorhanden. Fig. 6 zeigt dort einen Dreiphasen-Dreipunkt-Gleichrichter in Dreieckschaltung mit einer ausgangsseitigen Serienschaltung zweier Gleichspannungsquellen E1, E2, wobei ebenfalls drei elektronische Schalter vorhanden sind. Es sind außerdem sechs zusätzliche elektronische Schalter angeordnet, die mit dem Mittelpunkt der ausgangsseitigen Serienschaltung verbunden sind. Mit dieser 9-Transistorschaltung wird eine Reduzierung der Schaltfrequenz und eine optimale Lastverteilung angestrebt.

Das Dokument EP-A-0 427 143 zeigt einen als Leistungshalbleitermodul ausgeführten Brückenzweig, wobei Hauptanschlußleitungen mit breiten Bändern ausgeführt sind und auch modulinterne Verbindungen induktivitätsarm ausgeführt sind.

Der Erfindung liegt daher die Aufgabe zugrunde, eine gegenüber der aus der DE-A1-42 19 222 bekannten Vorrichtung bezüglich Realisierungsaufwand und Arbeitsweise, bzw. Betriebsverhalten und Betriebsbereich verbesserte Vorrichtung, sowie ein geeignetes Verfahren zur Steuerung und Regelung der Vorrichtung anzugeben.

Aus Proceedings of the industry applications society annual meeting, Houston, Oct. 4-9, 1992, Seiten 695-702, Oguchi et al, "A multilevel-voltage source rectifier with a three-phase diode bridge circuit as a main power circuit" ist es in diesem Zusammenhang bekannt, einen zusätzlichen Schaltkreis an die Verbindungspunkte von Drehstrom-Diodenbrücke und Vorschaltinduktivitäten, an den Mittelanschluß der ausgangsseitigen, seriengeschalteten Kondensatoren und an beide Gleichspannungsschienen anzuschließen. Dabei ist der Mittelanschluß über eine Induktivität und drei elektronische Schalter mit den Verbindungspunkten Diodenbrücke/Vorschaltinduktivitäten verbindbar. Des weiteren ist dieser Mittelanschluß über eine weitere Induktivität und zwei elektronische Schalter mit den beiden Gleichspannungsschienen verbindbar. Der zusätzliche Schaltkreis hat die Funktion eines aktiven Filters und die Funktion eines Zwangskommutierungs-Schaltkreises für die Dioden und verbessert insbesondere die Kurvenform des Eingangsstromes. Die Eingangsspannung erhält aufgrund dieses zusätzlichen Schaltkreises eine Mehrpunkt-Kurvenform.

Der Erfindung liegt daher die Aufgabe zugrunde, eine gegenüber der aus der DE-A-42 19 222 bekannten Vorrichtung bezüglich Realisierungsaufwand und Arbeitsweise, bzw. Betriebsverhalten und Betriebsbereich verbesserte Vorrichtung, sowie ein geeignetes Verfahren zur Steuerung und Regelung der Vorrichtung anzugeben.

Diese Aufgabe wird bei einer Vorrichtung nach dem Oberbegriff des Anspruchs 1 dadurch gelöst,
- daß die elektronischen Schalter in die Drehstrom-Diodenbrücke integriert sind, wobei die Drehstrom-Diodenbrücke durch von den Klemmen der Leistungshalbleiter abzweigende Dioden gebildet ist und
- daß die jeweils zweiten wechselspannungsseitigen Klemmen der elektronischen Schalter in einem Sternpunkt zusammengeschaltet sind, wobei der Mittelanschluß der seriengeschalteten Kondensatoren - abgesehen von Meßleitungen - ausschließlich mit diesem Stempunkt verbunden ist.

Diese Aufgabe wird hinsichtlich des Verfahren zur Steuerung und Regelung der Vorrichtung in Verbindung mit dem Obergriff des Anspruchs 6 dadurch gelöst, daß die Steuersignale durch einen auch das Vorzeichen der Netzphasenspannungen erfassenden Funktionsblock derart modifiziert werden, daß unabhängig vom Vorzeichen der Netzspannungen bei Überschreiten einer Schwelle eines Hysteresegliedes in der zugehörigen Phase eine Änderung des Schaltzustandes des jeweiligen elektronischen Schalters im Sinne einer betragsmäßigen Verkleinerung der Phasenstrom-Regelabweichung vorgenommen wird.

Vorteilhafte Ausgestaltungen und Realisierungsmöglichkeiten sind in weiteren Ansprüchen angegeben.

Das erfindungsgemäße Gleichrichtersystem wird durch eine, über nach Phasen getrennte oder zu einem dreiphasigen magnetischen Speicher zusammengefaßte Vorschaltinduktivitäten an das Dreiphasennetz gelegte Drehstrom-Diodenbrücke, eine deren Leitzustand steuernde Kombination abschaltbarer elektronischer Schalter und zwei in Serie geschaltete, die Ausgangsgleichspannung stützende, beispielsweise als Kondensatoren oder elektrochemische Speicher ausgeführte, elektrische Energiespeicher gebildet Hier wird weiter von Kondensatoren oder Ausgangskondensatoren gesprochen. Die elektronischen Schalter werden zwischen den Wechselspannungsklemmen der Drehstrom-Diodenbrücke und dem aufgrund der Serienschaltung der Ausgangskondensatoren zugänglichen Mittelpunkt der Ausgangs-Gleichspannung angeordnet.

Eine weitgehend sinusförmige Stromaufnahme des Systems wird dadurch erreicht, daß an der Eingangsseite der Gleichrichterbrücke durch entsprechende Steuerung der abschaltbaren Ventile ein auf die Netzspannung synchronisiertes, aus pulsbreitenmodulierten Rechteckimpulsen zusammengesetztes Spannungssystem mit hohem Grundschwingungsanteil gebildet wird. Die strombildende Wirkung der Oberschwingungen dieses Spannungssystems wird durch die Vorschaltinduktivitäten begrenzt und der Netzstrom des Gleichrichtersystems damit überwiegend durch die Differenz des über die Steuerung in Phasenlage und Amplitude beeinflußbaren Grundschwingungsanteiles des Spannungssystems und der Netzspannung definiert. Vorteilhaft kann somit ein die Belastung des Netzes minimierendes, rein ohmsches Grundschwingungs-Netzverhalten der Anordnung erreicht werden.

Das Gleichrichtersystem weist insbesondere bezüglich des Oberschwingungsspektrums der Eingangsspannung der Drehstrom-Diodenbrücke - und damit auch des Netzstromes - und der Sperrspannungsbelastung der elektronischen Schalter Vorteile gegenüber dem Stand der Technik entsprechenden Systemen auf.

Durch die gegen den Mittelpunkt der Ausgangsspannung geschalteten Ventile steht neben der positiven und negativen Ausgangsspannung auch die Mittelpunktsspannung zur Bildung der ideal rein sinusförmig verlaufenden Geichrichtereingangs-Phasenspannungen zur Verfügung. Jeder Brückenzweig kann demgemäß durch einen dreipoligen Umschalter ersetzt werden, welcher über Pulsbreitenmodulation aus drei Spannungsniveaus die für die Einprägung des Eingangsstromes vorzugebende Spannungsgrundschwingung bildet. Die Anordnung kann demgemäß als Dreiphasen-Dreipunkt-Pulsgleichrichter bezeichnet werden.

Führt die zur positiven Schiene der Zwischenkreisspannung geschaltete Diode einer Phase Strom (positive Stromhalbschwingung; Sperrzustand des dieser Phase zugeordneten elektronischen Schalters), wird eine positive, bei Durchschalten des zum Mittelpunkt der Ausgangsspannung führenden elektronischen Schalters Spannung 0 ausgegeben. (Als Bezugspunkt der Spannungen wird der Ausgangsspannungsmittelpunkt gewählt.) Mit Umkehr der Stromrichtung (Leiten der zur negativen Schiene der Zwischenkreisspannung geschalteten Diode) wechselt auch das Vorzeichen der ausgegebenen Spannung.

Vorteilhaft kann also jede Spannungshalbschwingung durch Pulsbreitenmodulation nur der halben und nicht der vollen Ausgangsspannung gebildet werden. Die in Form von Spannungsoberschwingungen und letztlich Netzstromoberschwingungen auftretenden Abweichungen der pulsbreitenmodulierten Spannung gegenüber dem ideal rein sinusförmigen Verlauf werden hiermit erheblich verringert. Dies erlaubt bei gegebener maximal zulässiger Oberschwingungsstrombelastung des Netzes eine Verringerung der Induktivität der Vorschaltinduktivitäten (gleichbedeutend einer Erhöhung der Leistungsdichte) bzw. bei Beibehaltung des Induktivitätswertes eine Verringerung der Taktfrequenz der Anordnung.

Weiters wird die Sperrspannungsbeanspruchung der abschaltbaren Ventile durch die halbe Zwischenkreisspannung und nicht - wie bei konventioneller Ausführung -durch die volle Ausgangsspannung bestimmt. Diese Reduktion ermöglicht auch bei hohen Ausgangsspannungen den Einsatz niedersperrender Ventile, deren hohe Schaltgeschwindigkeit und geringen Schaltverluste für eine Erhöhung der Taktfrequenz genützt werden können.

Der durch die Netzströme gebildete Wirkleistungsfluß wird über die Drehstrom-Diodenbrücke und die elektronischen Schalter in die ausgangsseitigen elektrischen Speicher geführt. Die Regelung des Leistungsflusses und damit die Regelung der über dem Spitzenwert der verketteten Netzspannung liegenden Ausgangsspannung kann demgemäß über die durch das dreiphasige System pulsbreitenmodulierter Spannungen und das Netzspannungssystem definierte Wirkkomponente des Netzstromes bzw. bei ohmschem Netzverhalten über die Amplitude des Netzstromes erfolgen.

Ausführungsvarianten der abschaltbaren elektronischen Schalter sind in den Ansprüchen 2 und 3 beschrieben.

Grundsätzlich ist ein bidirektionaler (ein unabhängig von der Polarität der anliegenden Sperrspannung sperrender und den Stromfluß unabhängig von der Richtung des Stromflusses unterbrechender) abschaltbarer elektronischer Schalter bzw. Leistungshalbleiter zu realisieren. Dies kann durch
- Gegen-Serienschaltung zweier unidirektionaler elektronischer Schalter bzw. Leistungshalbleiter (beispielsweise von MOSFETs oder IGBTs) mit antiparalleler Freilaufdiode,
- die Aniparallelschaltung symmetrisch sperrender GTOs,
- die Antiparallelschaltung von Bipolartransistoren oder IGBTs mit Seriendiode oder durch
- Anordnung eines unidirektionalen elektronischen Schalters zwischen den Ausgangsklemmen einer Einphasen-Diodenbrückenschaltung, deren Eingangsklemmen die Schalterpole bilden,
erfolgen.

Des weiteren wird gemäß Anspruch 6 ein Verfahren zur Steuerung und Regelung der erfindungsgemäßen Vorrichtung auf der Grundlage einer sehr einfachen und parameterunempfindlichen Ausführung der Steuereinheit der Anordnung vorgeschlagen. Die Differenz zwischen einem vorgegebenen Sollwert und dem Istwert der Ausgangsspannung wird dabei entsprechend der Struktur einer zweischleifigen Regelung zur Bildung des Sollwertes der Amplitude der Netzphasenströme herangezogen. Die Multiplikation dieses Amplitudenwertes mit von den Netzphasenspannungen abgeleiteten, bei Forderung nach ohmschem Netzverhalten diesen proportionalen Signalen führt auf die der unterlagerten, im einfachsten Fall über unabhängige Phasen-Zweipunktregler realisierten Stromregelschleife zugeführten Netzstromsollwerte. Die Steuersignale der elektronischen Schalter werden dabei direkt durch dem Soll-Istvergleich der Phasenströme nachgeordnete Hystereseschaltglieder gebildet. Unterschreitet ein Phasenstrom beim Leiten der die positive Ausgangsspannungsschiene speisenden Diode - also innerhalb der im weiteren positiv gezählten Netzspannungs- bzw. Netzstromhalbschwingung - die untere Schaltschwelle, wird der zugeordnete elektronische Schalter durchgeschaltet und damit der Strom wieder erhöht. Das Abschalten des Schalters wird durch das Überschreiten der oberen Schaltschwelle ausgelöst Bei negativer Netzspannung führt ein Durchschalten des elektronischen Schalters zwar zu einer betragsmäßigen Erhöhung, aufgrund des negativen Vorzeichens der Spannung jedoch zu einer Verringerung des Stromwertes, weshalb die Ausgangssignale der Hystereseschaltgieder in diesem Fall in invertierter Form zur Steuerung der elektronischen Schalter heranzuziehen sind. Zwischen den Hystereseschaltgliedern und den Steuereingängen ist demgemäß eine die Steuersignale bei negativem Vorzeichen der zugeordneten Netzphasenspannungen invertierende Kontrolleinheit anzuordnen.

Neben den beschriebenen vorteilhaften Verfahren können eine Vielzahl bekannter Verfahren zur Steuerung der Spannungsbildung und Regelung der Ausgangsspannung eingesetzt werden. Insbesondere sind hier Verfahren zu nennen, bei denen, zyklisch zwischen den Phasen wechselnd, ein Brückenzweig während mehrerer Pulsperioden nicht getaktet wird oder die Berechnung des Pulsmusters unter Bezugnahme auf einen durch mathematische Transformation der Phasengrößen gebildeten komplexen Dreiphasen- oder Raumzeiger berechnet oder über diesem Berechnungsalgorithmus entsprechende Schaltungen realisiert wird.

Durch Weiterentwicklung des Verfahrens nach Anspruch 6 wird eine Symmetrierung der Ausgangsteilspannungen ermöglicht. Als in den Mittelpunkt der Ausgangsspannung fließender Strom treten, entsprechend den Schaltzuständen der elektronischen Schalter gebildete Ausschnitte aus Summen und Teilsummen der Netzphasenströme auf. Insbesondere bei Zweipunktregelung der Netzströme werden die Schaltbefehle ohne Berücksichtigung eines gegebenenfalls auftretenden, von 0 verschiedenen, den Spannungsmittelpunkt bei Ausführung der ausgangsseitigen elektrischen Speicher als Kondensatoren verschiebenden Mittelpunktsstrommittelwertes vorgegeben.

Die aufgrund der Erhöhung der Sperrspannungsbeanspruchung der Schalter und der Betriebsspannung eines Ausgangskondensators nachteilige asymmetrische Spannungsaufteilung kann nun erfindungsgemäß durch Einbeziehung eines Korrektursignales in die Phasenstrom-Zweipunktregelung unterbunden werden. Das Korrektursignal wird in Abhängigkeit von der durch die Messung einer Ausgangsteilspannung bei gegebenem Ausgangsspannungssollwert erfaßbaren Abweichung von der symmetrischen Spannungsaufteilung gebildet und zu den Phasenstromsollwerten addiert. Dieser für alle Phasen gleiche Offset der Phasenströme kann aufgrund des freien Netzsternpunktes, der die Summe der Phasenströme zu 0 zwingt, nicht eingestellt werden, führt jedoch zu einer Beeinflussung des Verhältnisses der Leitdauer des elektronischen Schalters und der Leitdauern der Dioden jeder Phase. Ein positiver Offset verlängert während der positiven Netzspannungs- bzw. Netzstromhalbschwingung die Leitdauer des elektronischen Schalters (bei negativer Netzspannung bzw. negativem Netzstrom wird aufgrund der dann vorliegenden Inversion des Ausgangssignales des Hystereseschaltgliedes die Leitdauer verkürzt), womit in jeder Phase resultierend ein die Spannung des mit der negativen Ausgangsspannungsschiene verbundenen (unteren) Ausgangskondensators erhöhender bzw. jene des mit der positiven Ausgangsspannungsschiene verbundenen (oberen) Kondensators verringernder Mittelpunktsstrom auftritt. Entsprechend führt eine Vorzeichenumkehr des Offsetsignales zu einer Erhöhung der oberen und einer Verringerung der unteren Teilspannung.

Neben dem beschriebenen Verfahren können auch zusätzlich passive oder aktive, zwischen positiver und negativer Ausgangsspannungsschiene und Mittelpunkt angeordnete Symmetrierschaltungen und andere für Dreipunkt-Pulswechselrichter bekannte Verfahren eingesetzt werden.

Vergleicht man die in Fig. 1 dargestellte erfindungsgemäße Vorrichtung (nachstehend als Schaltung A bezeichnet) speziell mit der in Fig. 16 der DE-A1-42 19 222 gezeigten Schaltung (nachstehend als Schaltung B bezeichnet), so sind folgende Vorteile der Schaltung A festzustellen:
1. Die Schaltung A erfordert einen geringeren Aufwand durch Weglassung der Kondensatoren 115, Verringerung der Systemkomplexität und -kosten und ermöglicht eine Erweiterung des Betriebsbereichs.
2. Im Fall der Schaltung A wird eine gegenüber B gleiche Qualität des Netzstromes bei (in erster Näherung) nur *halber* Schaltfrequenz der Leistungstransistoren erreicht (unter Voraussetzung gleicher Schaltungsauslegung). Dies bedeutet eine erhebliche Verringerung eines, die Gesamtverluste wesentlich bestimmenden Verlustanteiles und kann zur Verringerung des Kühlaufwandes und damit des Volumens und Gewichtes des Stromrichters oder zu einer Erhöhung der Taktfrequenz und damit signifikanten Verringerung des netzseitigen Filteraufwandes bzw. einer Erhöhung der Regeldynamik herangezogen werden (durch beide Möglichkeiten ist eine Verringerung der Systemkosten erreichbar).
3. Die durch Weglassung der im Fall A gegebenen Verbindung zwischen Netzsternpunkt und Ausgangsspannungsmittelpunkt erreichte Entkopplung erlaubt weiters einen Betrieb von A mit *Eingangsstromphasenwinkeln* ϕε[30° *kap*., 90° *ind*.]; System B ist auf rein ohmschen Betrieb (ϕ=0) beschränkt. Dieser Freiheitsgrad von A kann zur Kompensation der Blindleistungsaufnahme eines zur Begrenzung von Netzrückwirkungen dem Konverter vorzuschaltenden Netzfilters (entsprechend ohmschem *Netz*verhalten) oder bei schwachen Netzen (und hoher Systemleistung) zur Spannungsstützung herangezogen werden.
4. Die Sperrspannungsbeanspruchung der Dioden 17, 18 (System B, entsprechend Dioden 18, 19, 20, 24, 25, 26 von System A) wird für A ideal auf den *halben* Wert reduziert. Es können somit Dioden geringer Sperrspannungsfestigkeit und damit geringerer Sperrverzugszeit (gleichbedeutend signifikant geringeren Schaltverlusten) eingesetzt und die Systemkosten reduziert werden.
5. Der für volle Steuerbarkeit erforderliche Mindestwert der Ausgangsspannung U₀ wird für B durch den zweifachen Spitzenwert der Netzphasenspannung, für Schaltung A durch den Spitzenwert der verketteten Spannung definiert. Bei Einsatz der Systeme am europäischen Niederspannungsnetz (230V/400 ± 10%) bedeutet dies für A: *U*₀>620 V, für B: *U*₀>720 V. Mit Rücksicht auf eine vorzusehende Regelreserve ist dabei für A etwa *U*₀≈680 V und für B *U*₀≈780 V zu wählen. Unter Berücksichtigung von Schaltüberspannungen sind daher für B im Sinne hinreichende Betriebssicherheit Leistungsschalter 97, 98, 99 mit einer Sperrspannungsfestigkeit > 600 V einzusetzen. Für A können die Elemente 61 vorteilhaft als LeistungsMOSFET's mit einer maximal zulässigen Sperrspannung von 500 V ausgeführt werden, womit aufgrund des, bei Verringerung der Spannungsfestigkeit progressiv fallenden Durchlaßwiderstandes (und der geringeren Bauelementkosten) ein Vorteil gegeben ist. Weiters kann für A der Zwischenkreis durch eine Serienschaltung von Elektrolytkondensatoren 6 und 7 mit einer Nennspannung von 350 V realisiert werden. Für B sind - gleichbedeutend mit höheren Realisierungskosten - Kondensatoren mit 400 V Nennspannung einzusetzen.
6. Das für B angegebene Regelverfahren ist in der Praxis nicht ohne weiteres einsetzbar, da bei Polaritätsumkehr der jeweiligen Netzphasenspannung keine Inversion der Schaltentscheidung (für A durch 53 und 42 berücksichtigt) vorgenommen wird. Bei positiver Netzspannung wird dabei der Strom bei Überschreiten der oberen (betragsmäßig größeren) Schaltschwelle weiter erhöht, was zu einem weiteren Anwachsen des Stromes und damit zu einer Abweichung von der (idealen) Sinusform bzw. zum Auftreten niederfrequenter Netzstromschwingungen führt. Weiters ist für B die in der Praxis jedenfalls erforderliche Regelung der Spannung des kapazitiv gebildeten Sternpunktes 114 nicht vorgesehen, was bei verschiedenen Schaltverzugszeiten der Ventile und Ansteuerstufen (resultierend in einem Gleichanteil des in der Verbindung Netzsternpunkt-Ausgangsspannungsmittelpunkt fließenden Stromes) zu einer Unsymmetrie der Ausgangsteilspannungen und zu verschiedener Strom- und Spannungsbelastung der Ventile der positiven und negativen Brückenhälfte führt.

Die Erfindung sowie vorteilhafte Ausgestaltungen werden im weiteren anhand von Ausführungsbeispielen näher erläutert, die in Zeichnungsfiguren dargestellt sind. Es zeigt:
- Fig. 1: Struktur einer bevorzugten Ausführung des erfindungsgemäßen Dreiphasen-Dreipunkt-Pulsgleichrichters;
- Fig. 2a bis 2c: alternative Ausführungsformen bidirektionaler elektronischer Schalter für den Einsatz im Dreiphasen-Dreipunkt-Pulsgleichrichter in entsprechender Schaltungsstruktur;
- Fig. 3: die Grundstruktur einer Ausführungsvariante des Steuerteiles der erfindungsgemäßen Stromrichterschaltung, die eine Symmetrierung der Ausgangsteilspannungen über Einbeziehung eines Korrektursignales in die, der Ausgangsspannungsregelung unterlagerte Phasenstromregelung erlaubt;
- Fig. 4: die Grundstruktur des Leistungsteiles des erfindungsgemäßen Systems bei Einsatz der in Fig. 2(c) angegebenen Ausführungsform der bidirektionalen elektronischen Schalter, die auch in Fig. 1 eingesetzt ist, aber in Abwandlung der Struktur gemäß Fig. 1;
- Fig. 5: Realisierungsform eines Brückenzweigs aus Fig. 1 bzw. Fig. 7 als Modul;
- Fig. 6: bestücktes Substrat des Moduls gemäß Fig. 5;
- Fig. 7: der Modulausführung zugrundeliegende elektrische Schaltung.

In Fig. 1 ist ein Dreiphasen-Dreipunkt-Pulsgleichrichtersystem 1 dargestellt, dessen Grundfunktion in der Umformung eines durch Phasen-Wechselspannungsquellen 2, 3, 4 symbolisierten dreiphasigen Spannungssystems 5 in eine über der Serienschaltung der Ausgangskondensatoren 6 und 7 auftretende Gleichspannung besteht.

Der Eingangsteil des Systems wird durch in jeder Phase angeordnete Vorschaltinduktivitäten 8, 9 und 10 gebildet. Die der Netzseite abgewandten Klemmen dieser magnetischen Energiespeicher werden über Verbindungsleitungen 11, 12, 13 an die wechselspannungsseitigen Klemmen 14, 15, 16 einer dreiphasigen Diodenbrückenschaltung 17 geführt, deren anodenseitig indirekt an den Klemmen 14, 15, 16 liegende, kathodenseitig verbundenen Ventile 18, 19, 20 über die die positive Ausgangsspannungsschiene bildende Verbindungsleitung 21 mit dem positiven Pol 22 der Ausgangskondensator-Serienschaltung und der positiven Ausgangsspannungsklemme 23 verschaltet und deren anodenseitig verbundene, kathodenseitig indirekt an den Klemmen 14, 15, 16 liegenden Ventile 24, 25, 26 über die die negative Ausgangsspannungsschiene bildende Verbindungsleitung 27 mit dem negativen Pol 28 der Ausgangskondensator-Serienschaltung und der negativen Ausgangsspannungsklemme 29 verbunden sind. Der Leitzustand und damit die Abbildung der Ausgangsspanung an die Eingangsseite der Drehstrombrückenschaltung 17 bzw. die Bildung der Netzströme des Gleichrichters wird durch Schalter 30, 31, 32 beeinflußt. Die elektronischen Leistungsschalter 30, 31, 32 sind dabei in die Dreiphasen-Diodenbrücke 17 integriert. In jeder Phase ist die Kollektorklemme 77 bzw. 79 bzw. 81 eines unidirektionalen, unipolaren, abschaltbaren Leistungshalbleiters 61 mit der Anode der kathodenseitig an der positiven Ausgangsspannungsschiene 21 liegenden Diode 18 bzw. 19 bzw. 20 und die Emitterklemme 78 bzw. 80 bzw. 82 mit der Kathode der anodenseitig an der negativen Ausgangsspannungsschiene 27 liegenden Diode 24 bzw. 25 bzw. 26 verbunden.

Die Leistungsschalter 30, 31, 32 sind jeweils gebildet durch den abschaltbaren Leistungshalbleiter 61, der zwischen die gleichspannungsseitigen Ausgangsklemmen 77 und 78, bzw. 79 und 80, bzw. 81 und 82 einer Einphasen-Diodenbrückenschaltung 60 geschaltet ist. Die Pole der Schalter 30, 31, 32 werden durch die wechselspannungsseitigen Klemmen 14, 15, 16, bzw. die in einem Sternpunkt 33 zusammengeschalteten Klemmen gebildet.

Der Sternpunkt 33 ist durch eine Verbindungsleitung 34 mit dem Mittelanschluß 35 der seriengeschalteten Kondensatoren 6, 7 verbunden. Die Ausgangsspannung wird ausgehend von den Ausgangsklemmen 23 und 29 über die Verbindungsleitungen 37 und 38 einem verbraucherkreis 39 zugeführt.

Einer Steuereinheit 40 werden neben einem externen Steuersignal 41 über die zu einer dreipoligen Verbindungsleitung 42 zusammengefaßten Verbindungsleitungen 44, 45, 46 die Netzphasenspannungen, über die Verbindungsleitung 47 die Ausgangs-Mittelpunktsspannung und über die Verbindungsleitung 48 der Meßwert der Ausgangsspannung zugeführt, wobei über einen weiteren externen, mehrpoligen Eingang 49, etwa bei Realisierung einer Strombegrenzung, auch der Wert des Ausgangsstromes oder Meßwerte der Schalterströme einbezogen werden können (aus Gründen der Übersichtlichkeit in Fig.1 nicht dargestellt).

Die Steuerung des Systems erfolgt vorteilhaft derart, daß an den Klemmen 14, 15, 16 pulsbreitenmodulierte, bei positivem (physikalisch zu den Wurzelpunkten führendem) Stromfluß zwischen dem Spannungspegel der positiven Ausgangsspannungsschiene 21 und der Spannung des Mittelpunktes 35 der Ausgangsspannung wechselnde und bei physikalisch negativem Netzstrom zwischen dem Spannungsniveau der negativen Ausgangsspannungsschiene 27 und der Spannung des Mittelpunktes 35 der Ausgangsspannung wechselnde, entsprechend der Phasenverschiebung der zugeordneten Netzphasenspannungen 2, 3, 4 versetzte Spannungen gebildet werden.

Dies wird durch entsprechende Ansteuerung der elektronischen Schalter 30, 31, 32 durch die Steuereinheit 40 erreicht. (In Fig. 1 sind die zugehörigen Verbindungsleitungen nicht dargestellt.) Bei durchgeschaltetem Schalter 30, 31 oder 32 wird an die Klemmen 14, 15 oder 16 die Spannung des Ausgangsspannungsmittelpunktes 35 durchgeschaltet, bei Sperrung der Schalter 30, 31 oder 32 wird das Potential der Klemmen 14, 15, 16 durch den Leitzustand der Diodenbrücke 17 definiert, wobei bei positivem Eingangsphasenstrom die Spannung der positiven Ausgangsspannungsschiene 21 und bei negativem Eingangsphasenstrom die Spannung der negativen Ausgangsspannungsschiene 27 die zugeordnete Klemmenspannung definiert.

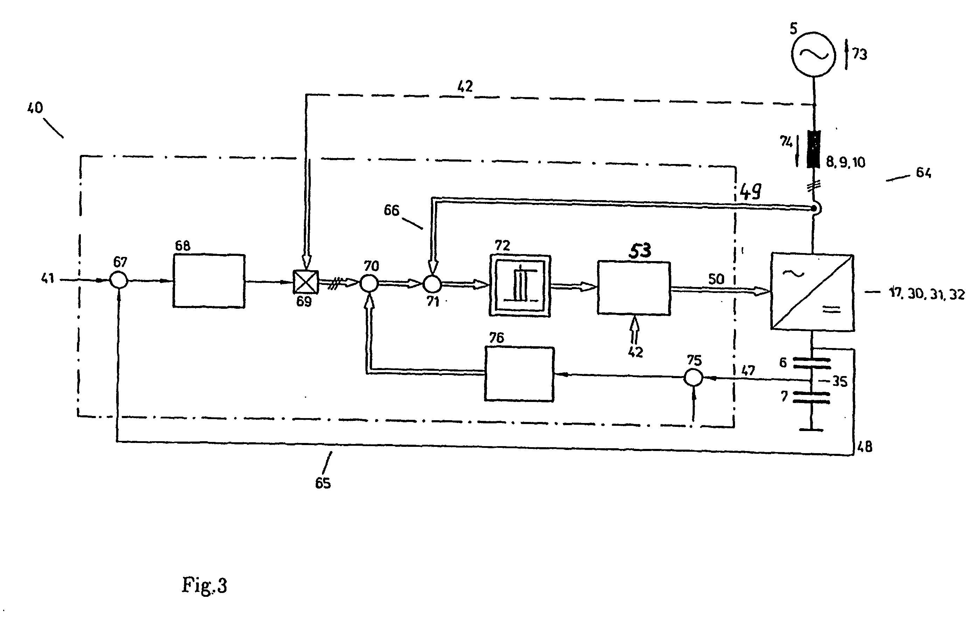

Die Pulsbreitenmodulation der, über Steuerleitungen 50 (siehe Fig. 3) den elektronischen Schaltern 30, 31, 32 zugeführten Ansteuersignale erfolgt unter Berücksichtigung des durch die über den Vorschaltinduktivitäten 8, 9, 10 auftretende Differenz der Netzphasenspannungen und der Klemmen(14,15,16)-Spannungen eingeprägten Netzphasenstromflusses, welcher zur Minimierung der Netzbelastung vorteilhaft weitgehend sinusförmig und bezüglich der Grundschwingung in Phase mit den Netzphasenspannungen liegend geregelt wird.

Der durch die Netzphasenströme resultierende Wirkleistungsfluß wird über die Dioden 18, 19, 20, 24, 25, 26 und die elektronischen Schalter 30, 31, 32 an den Ausgang weitergeschaltet, wobei das Niveau der zwischen den Klemmen 22 und 28 auftretenden Ausgangsspannung durch die Amplitude der Netzströme (und damit letztlich durch die durch die Steuereinheit definierten Klemmenspannungen) und die Belastung des Ausganges durch den Gleichspannungsverbraucher 39 festgelegt wird. Der Mittelpunkt 35 der Ausgangsspannung wird über die Serienschaltung von Ausgangskondensatoren 6 und 7 gebildet, weiters werden durch diese Kondensatoren Differenzen des eingespeisten und des verbraucherseitig benötigten Leistungsflusses ausgeglichen. Jene Teile der im weiteren angegebenen Ausführungsbeispiele, welchen bereits in Verbindung mit Fig. 1 ein Bezugszeichen zugewiesen wurde, werden auch im folgenden mit diesem Bezugszeichen bezeichnet.

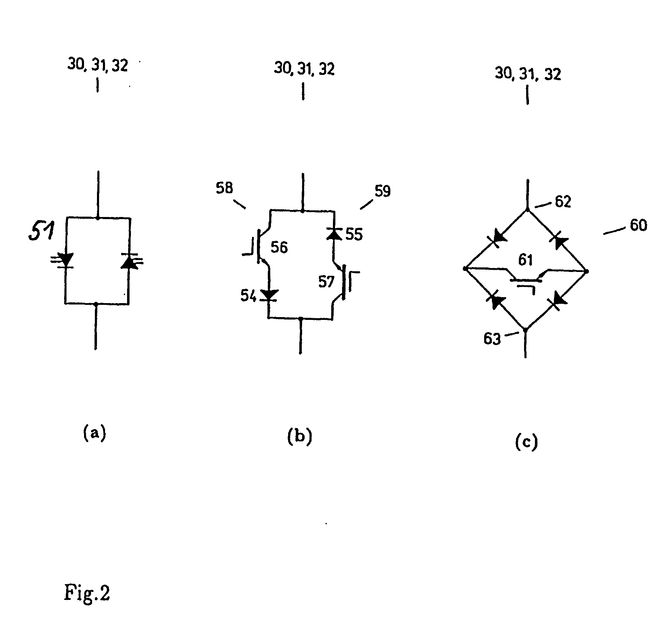

In den Fig. 2a und 2b sind weitere mögliche Ausführungen der elektronischen Schalter 30, 31, 32 über Kombination von Leistungshalbleiterelementen angegeben. Fig. 2c zeigt zum Vergleich die in Fig. 1 eingesetzte Schalterausführung.

Nach Fig. 2a sind bidirektionale, abschaltbare elektronische Schalter durch Antiparallelschaltung symmetrisch sperrender GTOs (GTO: Gate-Turn-Off Thyristor) realisiert, womit geringe Durchlaßverluste erzielbar sind.

Fig. 2b zeigt eine durch Antiparallelschaltung zweier unidirektionaler über Serienkombination einer Diode 54 bzw. 55 und IGBTs 56 bzw. 57 (IGBT: Insulated Gate Bipolar Transistor) realisierter Schaltelemente 58 bzw. 59 gebildete Ausführungsform.

In Fig. 2c ist eine nur einen zwischen die (gleichspannungsseitigen) Ausgangsklemmen der Einphasen-Diodenbrückenschaltung 60 geschalteten unidirektionalen, abschaltbaren Leistungshalbleiter 61 aufweisende Ausführungsform angegeben. Die Schalterpole werden dabei durch die (wechselspannungsseitigen) Eingangsklemmen 62, 63 der Diodenbrückenschaltung 60 gebildet. Der abschaltbare Leistungshalbleiter kann dabei auch durch einen asymmetrisch sperrenden GTO, einen Bipolartransistor oder einen MOSFET ersetzt werden.

Fig. 3 zeigt das Blockschaltbild einer vorteilhaften Ausführungsform der in Fig. 1 nur schematisiert eingetragenen Steuereinheit 40. Der Leistungsteil ist dabei in Form eines einsträngigen Ersatzschaltbildes 64 eingetragen, wobei die Bezugszeichen der Elemente wieder mit den bereits in Verbindung mit der Beschreibung von Fig. 1 gewählten übereinstimmen. Doppellinien kennzeichnen die Zusammenfassung von drei Phasensignalen, also den Übergang auf eine Vektordarstellung, wodurch die Übersichtlichkeit der Darstellung erhöht werden soll.

Aufgabe der Steuereinheit ist die Regelung der Ausgangsspannung und die Symmetrierung der über den Ausgangskondensatoren 6 und 7 auftretenden Ausgangsteilspannungen. Die Ausgangsspannungsregelung ist zweischleifig durch eine überlagerte Ausgangsspannungsregelschleife 65 und eine unterlagerte Stromregelschleife 66 ausgeführt.

Die auf einen durch eine externe Einstellvorrichtung über die Signalleitung 41 vorgegebenen Sollwert bezogene, durch eine Vergleichsstelle 67 gebildete Regelabweichung der Ausgangsspannung wird einem Regelelement 68 zugeführt, an dessen Ausgang der Momentanwert des Sollwertes der Amplitude der Phasenströme gebildet und durch Multiplikation mit, von den Netzphasenspannungen abgeleiteten, über die Signalleitung 42 zugeführten Signalen mittels eines Multipliziergliedes 69 in die Netzphasenstromsollwerte umgeformt wird. Diese Netzstrom-Sollwerte werden über einen Summationspunkt 70 zu der die Soll-Ist-Differenz der Phasenströme bildenden Vergleichstelle 71 geführt. Das Differenzsignal bildet den Eingang eines Hystereseschaltgliedes 72, an dessen Ausgang der eingetragenen Schaltcharakterisitk entsprechende, pulsbreitenmodulierte Phasenschaltsignale auftreten, welche durch eine Funktionseinheit 53 in die der Stromrichterschaltung 1 über die Steuerleitung 50 zugeführten Ansteuerbefehle der elektronischen Schalter 30, 31 und 32 umgeformt wird. Der durch den Funktionsblock 53 berücksichtigte Schaltungsteil übernimmt dabei die Aufgabe, jene Komponenten des beispielsweise in Form eines Tripels binärer Steuerbefehle vorliegenden, durch das Hystereseschaltglied 72 gebildeten Steuervektors zu invertieren, welche einer bezogen auf die positive Zählrichtung 73 negativen Netz-Phasenspannungsmomentanwert aufweisenden Phase zugeordnet sind. Hiermit wird für jede Phase erreicht, daß das Unterschreiten der negativen Schaltschwelle des Hystereseschaltgliedes bei positiver Netzphasenspannung zu einem Durchschalten des zugeordneten elektronischen Schalters und damit zu einem Wiederansteigen des in Richtung 74 positiv gezählten Netzphasenstromes führt, und bei negativen Netzphasenspannung das Unterschreiten der negativen Schaltschwelle eine Sperrung des zugeordneten elektronischen Schalters und damit ebenfalls ein Ansteigen des (bei ohmschem Netzverhalten ebenfalls negativen) Phasenstromes bewirkt, womit eine Führung der Netzströme in die Sollwerte umgebenden Toleranzbändern mit einer der Hysterese des Schaltgliedes 72 entsprechender Breite sichergestellt wird.

Wie ebenfalls in Fig. 3 eingetragen, kann durch Beeinflussung der Stromregelung 66 über ein in Abhängigkeit von der Asymmetrie der, über den Kondensatoren 6 und 7 auftretenden Ausgangsteilspannungen durch das Vergleichselement 75 gebildetes, durch das Regelelement 76 der Summationsstelle 70 zugeführtes, für alle Phasen gleiches Offsetsignal auch eine Regelung, insbesondere Symmetrierung, der Ausgangsteilspannungen vorgenommen werden. Bei positivem Ausgangssignal des Regelelementes 76 wird durch den Stromregler versucht, einen entsprechenden Offset der Netzphasenströme einzustellen, welcher aufgrund des freien Netzsternpunktes und damit der zu 0 erzwungenen Stromsumme allerdings nicht auftreten kann. Die durch den Stromregelkreis innerhalb der positiven Netz-Phasenspannungshalbschwingungen vorgenommene Erhöhung der Einschaltzeit der elektronischen Schalter 30, 31, 32 führt bei ohmschem Netzstrom zu einem positiven, die Spannung des Kondensators 6 verringernden und die Spannung des Kondensators 7 erhöhenden, resultierenden Stromfluß in den Knotenpunkt 35. Weiters wird dadurch die Einschaltzeit der elektronischen Schalter während der negativen Netzspannungshalbschwingungen verringert und damit im zeitlichen Mittel ebenfalls die vorstehend beschriebene Spannungsverschiebung bewirkt.

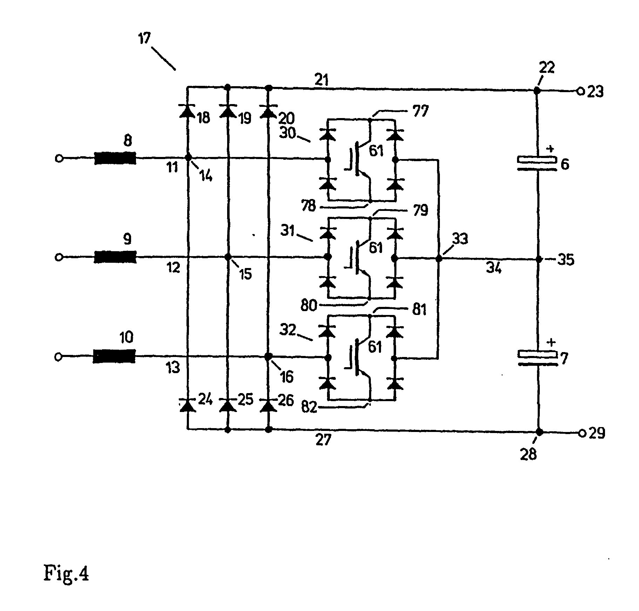

Fig. 4 zeigt eine mögliche Abwandlung des in Fig. 1 enthaltenen Leistungsteils der Schaltung. Die elektronischen Leistungsschalter 30, 31, 32 werden dabei nicht in die Dreiphasen-Diodenbrücke 17 integriert.

Ein Dreiphasen-Dreipunkt-Pulsgleichrichter der vorbeschriebenen Art kann besonders vorteilhaft in Form von Leistungshalbleitermodulen realisiert werden. Dabei werden zumindest die Leistungshalbleiter der Gesamtanordnung modulintegriert, wobei sowohl ein Gesamtmodul als auch eine Aufteilung in mehrere Module, insbesondere je Brückenzweig möglich ist. Mit einer solchen kompakten Anordnung und kurzen internen Verbindungsleitungen können parasitäre Induktivitäten der Verbindungsleitungen zwischen den Leistungshalbleiterbauelementen minimiert werden. Soweit die einzelnen Gleichrichterventile bzw. elektronischen Schalter durch parallelgeschaltete Bauelemente realisiert werden, kann eine weitgehend symmetrische Stromaufteilung durch geeignete Anordnung erreicht werden. Parasitäre Induktivitäten sollten besonders im Hinblick auf die bei Schaltvorgängen gegebenen Stromänderungen mit Flanken hoher Steilheit kleingehalten werden.

Geeignete Ausführungen von Leistungshalbleitermodulen sind beispielsweise in DE 31 27 457 C2 und DE 32 41 508 C2 beschrieben. Außerdem ist in Fig. 5 und Fig. 6 eine bevorzugte Modulausführung dargestellt.

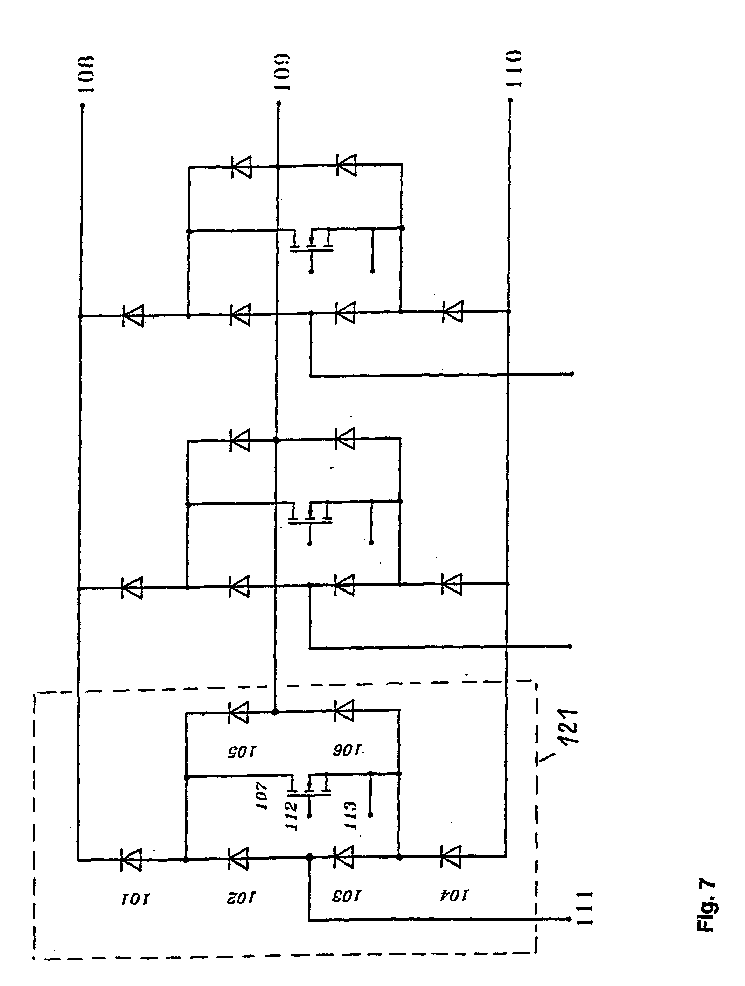

Das gezeigte Modul stellt eine Realisierung des in Fig. 7 mit gestrichelten Linien umrandeten Schaltungsteils, also eines Zweiges 121 der dreiphasigen Schaltungsanordnung dar. Durch gleichspannungsseitige Parallelschaltung dreier solcher Module ergibt sich eine Realisierung der in Fig. 7 dargestellten Gesamtschaltung. Dabei sollte darauf geachtet werden, daß auch die Parallelschaltung der Module induktivitätsarm durchgeführt wird. Eine Ausführungsmöglichkeit für äußere Modulverbindungen ist der EP-A-0 427 340 zu entnehmen. Dort ist für äußere Modulverbindungen eine sogenannte Bandleitungsgeometrie gewählt, deren Wellenwiderstand mit dem Wellenwiderstand interner Modulleitungen übereinstimmt.

Die in Fig. 7 gezeigte Schaltung entspricht dem in Fig. 1 dargestellten Leistungsteil der Gesamtschaltung.

Fig. 5 zeigt drei Ansichten des fertigen Moduls 120, Fig. 6 einen Blick auf ein bestücktes Substrat 119, das in das Kunststoffgehäuse 118 einsetzbar ist. Das Substrat 119 wird in einer Ausnehmung in der Bodenebene des Gehäuses 118 eingesetzt, wobei die bestückte Seite nach innen weist. Die auf dem Substrat 119 angeordneten Anschlüsse 117, bzw. 108 bis 113 und die Leistungshalbleiterbauelemente 101 bis 107 sind in den Fig. 5 bis 7 übereinstimmend bezeichnet, so daß hierzu weitere Erläuterungen entbehrlich sind. Ein mit Bezugszeichen 114 bezeichneter Anschluß wird zu Prüfzwecken oder in speziellen Anwendungen benutzt und ist in Fig. 7 nicht eingetragen. Modulinterne Verbindungen sind teils durch Kupferflächen 115, teils durch Drahtbonds 116 hergestellt, wodurch kurze, niederinduktive Verbindungen erreicht sind. Eine solche niederinduktive Verbindung ist z.B. im Fall einer Stromkommutierung, beispielsweise von Transistor 107 auf die Freilaufdioden 101 bzw. 104 von Bedeutung. Aus Fig. 6 ist auch die erstrebenswerte räumliche nahe Anordnung von zwei elektrisch parallelgeschalteten Transistoren 107 ersichtlich. In dem in Fig. 6 dargestellten Fertigungsschritt sind die kammartigen Anschlüsse 117 noch nicht zur Moduloberseite hin gebogen.

### Bezugszeichenliste

- 1: Dreiphasen-Dreipunkt-Pulsgleichrichtersystem
- 2, 3, 4: Wechselspannungsquelle
- 5: dreiphasiges Spannungssystem
- 6, 7: Ausgangskondensator
- 8, 9, 10: Vorschaltinduktivität
- 11, 12, 13: Verbindungsleitung
- 14, 15, 16: wechselspannungsseitige Klemme
- 17: dreiphasige Diodenbrückenschaltung
- 18, 19, 20: kathodenseitig verbundene Diode
- 21: Verbindungsleitung
- 22: positiver Pol der Serienschaltung der Kondensatoren 6, 7
- 23: positive Ausgangsklemme
- 24. 25. 26: anodenseitig verbundene Dioden
- 27: Verbindungsleitung
- 28: negativer Pol der Serienschaltung der Kondensatoren 6, 7
- 29: negative Ausgangsklemme
- 30, 31, 32: Schalter
- 33: Sternpunkt, bzw. miteinander verbundene Klemmen
- 34: Verbindungsleitung
- 35: Mittelanschluß der seriengeschalteten Kondensatoren 6, 7
- 36, 37, 38: Verbindungsleitung
- 39: Verbraucher
- 40: Steuereinheit
- 41: externes Steuersignal
- 42: dreipolige Verbindungsleitung (Signalleitung)
- 43: -
- 44, 45, 46: Verbindungsleitung
- 47, 48: Meßleitung
- 49: externer mehrpoliger Eingang
- 50: Steuerleitungen
- 51: symmetrisch sperrender GTO
- 52: -
- 53: Funktionseinheit (Funktionsblock)
- 54, 55: Diode
- 56, 57: IGBT
- 58, 59: Schaltelement
- 60: Einphasen-Diodenbrückenschaltung
- 61: abschaltbarer Leistungshalbleiter
- 62, 63: wechselspannungsseitige Eingangsklemmen der Diodenbrücke 60
- 64: einsträngiges Ersatzschaltbild des Leistungsteils
- 65: Ausgangsspannungsregelschleife
- 66: Stromregelschleife
- 67: Vergleichsstelle
- 68: Regelelement
- 69: Multiplizierglied
- 70: Summationspunkt
- 71: Vergleichsstelle
- 72: Hystereseschaltglied
- 73: positive Zählrichtung (Spannung)
- 74: positive Zählrichtung (Strom)
- 75: Vergleichselement
- 76: Regelelement
- 77 bis 82: gleichspannungsseitige Ausgangsklemmen
- 83 bis 100: -
- 101 bis 107: Leistungshalbleiterbauelemente
- 108 bis 114: Anschlüsse
- 115: Kupferfläche
- 116: Drahtbonds
- 117: Anschlüsse
- 118: Gehäuse
- 119: Substrat
- 120: Modul
- 121: Brückenzweig

## Patentansprüche

1. Vorrichtung zur Umformung eines dreiphasigen Spannungssystems (5) in eine vorgebbare, einen Verbraucher (39) speisende Gleichspannung, welche mittels einer über Vorschaltinduktivitäten (8, 9, 10) an ein Wechselspannungsnetz (2, 3, 4) gelegten Drehstrom-Diodenbrücke (17), einer die Verbraucherspannung stützenden Serienschaltung von Kondensatoren (6, 7) und mittels elektronischer Schalter (30, 31, 32) eine weitgehend sinusförmige Netzstromaufnahme erreicht, wobei
a) die elektronischen Schalter (30, 31, 32) durch eine Anordnung unidirektionaler, abschaltbarer, zwischen den gleichspannungsseitigen Klemmen (77 bis 82) von Einphasen-Diodenbrückenschaltungen (60) liegende Leistungshalbleiter (61) ausgeführt sind,
b) die Schalterpole der elektronischen Schalter (30, 31, 32) durch die Wechselspannungsklemmen (14, 15, 16 und jeweils 33) gebildet sind,
c) je eine wechselspannungsseitige Klemme (14, 15, 16) der elektronischen Schalter (30, 31, 32) mit einer der Vorschaltinduktivitäten (8, 9, 10) verbunden ist,
d) die elektronischen Schalter (30, 31, 32) durch eine Steuereinrichtung (40) gesteuert sind, deren Eingangssignale aus der dreiphasigen Wechselspannung, der Ausgangs-Gleichspannung, dem Eingangsstrom, dem Ausgangsstrom und vorgegebenen Sollwerten gebildet und ausgewählt sind,
**dadurch gekennzeichnet**.
e) daß die elektronischen Schalter (30, 31, 32) in die Drehstrom-Diodenbrücke (17) integriert sind, wobei die Drehstrom-Diodenbrücke (17) durch von den Klemmen (77 bis 82) der Leistungshalbleiter (61) abzweigende Dioden (18 bis 20 und 24 bis 26) gebildet ist und
f) daß die jeweils zweiten wechselspannungsseitigen Klemmen (33) der elektronischen Schalter (30, 31, 32) in einem Sternpunkt zusammengeschaltet sind, wobei der Mittelanschluß (35) der seriengeschalteten Kondensatoren (6, 7) - abgesehen von Meßleitungen (47) - ausschließlich mit diesem Sternpunkt (33) verbunden ist.

2. Vorrichtung nach Anspruch 1, **dadurch gekennzeichnet, daß** die elektronischen Schalter (30, 31, 32) durch eine Gegenserienschaltung zweier unidirektionaler, abschaltbarer Leistungshalbleiter mit antiparalleler Freilaufdiode, z.B. Leistungs-MOS-FETs, gebildet sind.

3. Vorrichtung nach Anspruch 1, **dadurch gekennzeichnet, daß** die elektronischen Schalter (30, 31, 32) durch eine Antiparallelschaltung unidirektionaler, abschaltbarer Leistungshalbleiter, z.B. symmetrisch sperrende GTOs, gebildet sind.

4. Vorrichtung nach einem der Ansprüche 1 bis 3, **dadurch gekennzeichnet, daß** wenigstens ein mit Leistungshalbleiter-Bauelementen (101 bis 107) gebildeter Schaltungsteil, der wenigstens einen Brückenzweig (121) bildet, als Leistungshalbleitermodul (120) ausgeführt ist, wobei durch geeignete Anordnung der Leistungshalbleiter-Bauelemente (101 bis 107) und kurze modulinterne Verbindungsleitungen (115, 116) ein Aufbau mit geringen parasitären Induktivitäten erreicht ist.

5. Vorrichtung nach Anspruch 4, **dadurch gekennzeichnet, daß** zur Bildung des gesamten Leistungshalbleiter-Schaltungsteils drei Leistungshalbleitermodule (120), die jeweils einen Brückenzweig (121) repräsentieren, gleichspannungsseitig parallelgeschaltet sind, wobei induktivitätsarme Verbindungselemente verwendet sind, die aus breiten Bändern mit geringem Abstand zueinander bestehen.

6. Verfahren zur Steuerung und Regelung einer Vorrichtung zur Umformung eines dreiphasigen Spannungssystems (5) in eine vorgebbare, einen Verbraucher (39) speisende Gleichspannung, welche mittels einer über Vorschaltinduktivitäten (8, 9, 10) an ein Wechselspannungsnetz (2, 3, 4) gelegten Drehstrom-Diodenbrücke (17), einer die Verbraucherspannung stützenden Serienschaltung von Kondensatoren (6, 7) und mittels elektronischer Schalter (30, 31' 32) eine weitgehend sinusförmige Netzstromaufnahme erreicht, wobei
- die elektronischen Schalter (30, 31' 32) durch eine Steuereinrichtung (40) gesteuert sind, deren Eingangssignale gebildet und ausgewählt sind aus der dreiphasigen Wechselspannung, derAusgangs-Gleichspannung, dem Eingangsstrom, dem Ausgangsstrom und vorgegebenen Sollwerten,
- die Bildung der den elektronischen Schaltern (30, 31' 32) über Steuerleitungen (50) zugeführten Ansteuersignale durch die Steuereinheit entsprechend der Funktion einer zweischleifigen Regelung der Ausgangsspannung der Vorrichtung erfolgt,
- der durch externe Einstellvorrichtungen vorgegebene Sollwert der Ausgangsspannung mittels einer Vergleichsstelle (67) mit dem über eine Signalleitung (48) zugeführten Istwert der Ausgangsspannung verglichen und das Ergebnis des Vergleiches an den Eingang eines Regelelementes (68) gelegt und dessen Ausgangssignal über ein Multiplizierglied (69) mit von den Netzphasenspannungen abgeleiteten Signalen zur Berechnung der Netz-Phasenstromsollwerte einer unterlagerten Stromregelschleife (66) herangezogen wird,
- die Regeldifferenzen der Phasenstrom-Sollwerte durch eine die Strom-Istwerte über Signalleitungen (49) erfassende Vergleichsstelle (71) gebildet und durch Hystereseschaltglieder (72) in pulsbreitenmodulierte Steuersignale umgeformt werden,
**dadurch gekennzeichnet, daß** die Steuersignale durch einen auch das Vorzeichen der Netzphasenspannungen erfassenden Funktionsblock (53) derart modifiziert werden, daß unabhängig vom Vorzeichen der Netzspannungen bei Überschreiten einer Schwelle eines Hysteresegliedes (72) in der zugehörigen Phase eine Änderung des Schaltzustandes des jeweiligen elektronischen Schalters (30,31,32) im Sinne einer betragsmäßigen Verkleinerung der Phasenstrom-Regelabweichung vorgenommen wird.

7. Verfahren nach Anspruch 6, **dadurch gekennzeichnet, daß** zur Regelung des Potentials des kapazitiven Ausgangsspannungsmittelpunktes (35) der Vorrichtung (1) mit Hysteresestromregelung den Hystereseschaltgliedern (72) zugeführten Sollwerten ein für alle Phasen gleiches, in Abhängigkeit der Asymmetrie der Ausgangsteilspannungen gebildetes Offsetsignal überlagert wird, welches bei Überwiegen der Spannung des ersten Ausgangskondensators (6) gegenüber der Spannung des zweiten Ausgangskondensators (7) während der positiven Netzphasenspannungs- bzw. Netzphasenstromhalbschwingungen die Einschaltdauern der elektronischen Schalter der zugeordneten Phasen verlängert und innerhalb der negativen Halbschwingungen verkürzt, und über den damit auftretenden Mittelwert des in den beiden Kondensatoren (6,7) gemeinsamen Punkt (35) gespeisten Stromes eine Verringerung der Asymmetrie herbeiführt, wobei bei Überwiegen der Spannung des zweiten Kondensators (7) gegenüber der Spannung des ersten Kondensators (6) eine gegensinnige Beeinflussung des resultierend in den Knotenpunkt (35) gespeisten Stromes vorgenommen wird.

## Claims

1. A device for converting a three-phase voltage system (5) into a predeterminable direct current voltage supplying a consumer (39), which, by means of a three-phase current diode bridge (17) applied via series inductances (8, 9, 10) to an alternating current voltage system (2, 3, 4), a series connection of capacitors (6, 7) supporting the consumer voltage, and by means of electronic circuit-breakers (30, 31, 32), obtains a largely sinusoidal line current input, wherein
a) the electronic circuit-breakers (30, 31, 32) are formed by an arrangement of unidirectional, disconnectible power semiconductors (61) located between the terminals (77 to 82) of single-phase diode bridge circuits (60) on the direct current voltage side,
b) the breaker poles of the electronic circuit-breakers (30, 31, 32) are formed by the alternating current voltage terminals (14, 15, 16 and 33 respectively),
c) a terminal (14, 15, 16) of each of the electronic circuit-breakers (30, 31, 32) on the alternating current voltage side is connected to one of the series inductances (8, 9, 10),
d) the electronic circuit-breakers (30, 31, 32) are controlled by means of a control system (40), the input signals of which are formed and selected from the three-phase alternating current voltage, the output direct current voltage, the input current, the output current and predetermined desired values,
characterised
e) in that the electronic circuit-breakers (30, 31, 32) are integrated into the three-phase current diode bridge (17), wherein the three-phase current diode bridge (17) is formed by diodes (18 to 20 and 24 to 26) branching off from the terminals (77 to 82) of the power semiconductors (61), and
f) in that the second terminals (33) of each of the electronic circuit-breakers (30, 31, 32) on the alternating current voltage side are connected together in a star point, the centre terminal (35) of the series-connected capacitors (6, 7) being exclusively - apart from measuring lines (47) - connected to this star point (33).

2. A device according to Claim 1, **characterised in that** the electronic circuit-. breakers (30, 31, 32) are formed by an opposing series connection of two unidirectional, disconnectible power semiconductors with anti-parallel freewheeling diode, e.g. power MOSFETs.

3. A device according to Claim 1, **characterised in that** the electronic circuit-breakers (30, 31, 32) are formed by an anti-parallel connection of unidirectional, disconnectible power semiconductors, e.g. symmetrically blocking GTOs.

4. A device according to one of Claims 1 to 3, **characterised in that** at least one circuit part, formed with power semiconductor components (101 to 107), which forms at least one bridge arm (121), is in the form of a power semiconductor module (120), a design with low parasitic inductances being achieved through appropriate arrangement of the power semiconductor components (101 to 107) and short connecting lines (115, 116) within the module.

5. A device according to Claim 4, **characterised in that**, to form the complete power semiconductor circuit part, three power semiconductor modules (120), each representing one bridge arm (121), are connected in parallel on the direct current voltage side, low-inductance connecting elements consisting of wide bands with a small gap being used.

6. A method for controlling and regulating a device for converting a three-phase voltage system (5) into a predeterminable direct current voltage supplying a consumer (39), which, by means of a three-phase current diode bridge (17) applied via series inductances (8, 9, 10) to an alternating current voltage system (2, 3, 4), a series connection of capacitors (6, 7) supporting the consumer voltage, and by means of electronic circuit-breakers (30, 31', 32), obtains a largely sinusoidal line current input, wherein
- the electronic circuit-breakers (30, 31', 32) are controlled by means of a control system (40), the input signals of which are formed and selected from the three-phase alternating current voltage, the output direct current voltage, the input current, the output current and predetermined desired values,
- the formation of the trigger signals supplied to the electronic circuit-breakers (30, 31', 32) via control lines (50) by the control unit takes place in accordance with the operation of two-loop feedback control of the output voltage of the device,
- the desired value of the output voltage predetermined by means of external adjustment devices is compared by means of a reference point (67) with the actual value of the output voltage supplied via a signal line (48) and the result of the comparison is applied to the input of a regulating element (68) and the output signal thereof is used via a multiplying element (69) with signals derived from the line phase voltages to calculate the desired line phase current values of a secondary current feedback control loop (66),
- the regulating differences of the desired phase current values are formed by means of a reference point (71) determining the actual current values via signal lines (49) and are converted by means of hysteresis circuit elements (72) into pulse width-modulated control signals,
**characterised in that** the control signals are modified by means of a function block (53) also determining the sign of the line phase voltages in such a way that, irrespective of the sign of the line voltages, when a threshold of a hysteresis element (72) is exceeded, in the associated phase changing of the switching state of the respective electronic circuit-breaker (30, 31, 32) is effected with the purpose of reducing the amount of the phase current regulation deviation.

7. A method according to Claim 6, **characterised in that** in order to regulate the potential of the capacitive output voltage centre point (35) of the device (1) with hysteresis current regulation, an offset signal which is the same for all phases and is formed in dependence on the asymmetry of the output partial voltages is superimposed on the desired values supplied to hysteresis circuit elements (72), which offset signal, when the voltage of the first output capacitor (6) prevails over the voltage of the second output capacitor (7), during the positive line phase voltage half-waves or line phase current half-waves extends the on-periods of the electronic circuit-breakers of the associated phases and shortens them within the negative half-waves, and via the mean value, thereby appearing, of the current supplied into the point (35) common to both capacitors (6, 7), brings about a reduction of the asymmetry, wherein, when the voltage of the second capacitor (7) prevails over the voltage of the first capacitor (6), opposite influencing of the resulting current supplied into the nodal point (35) is effected.

## Revendications

1. Dispositif pour la conversion d'un système de tension (5) triphasé en une tension continue prédéfinissable et alimentant un utilisateur (39), qui atteint une consommation de courant de réseau de forme largement sinusoïdale au moyen d'un pont à diodes triphasé (17) posé au moyen d'inductances en amont (8, 9, 10) sur un réseau de tension alternative (2, 3, 4), d'un montage en série de condensateurs (6, 7) supportant la tension d'utilisateur et au moyen d'interrupteurs électroniques (30, 31, 32), moyennant quoi
a) les interrupteurs électroniques (30, 31, 32) sont réalisés par un agencement de semi-conducteurs de puissance (61) unidirectionnels, déconnectables, disposés entre les bornes (77 à 82) côté tension continue de montages en pont monophasés à diodes (60),
b) les pôles des interrupteurs électroniques (30, 31, 32) sont constitués par les bornes de tension alternative (14, 15, 16 et respectivement 33),
c) chaque borne (14, 15, 16) côté tension alternative des interrupteurs électroniques (30, 31, 32) est reliée à l'une des inductances en amont (8, 9, 10),
d) les interrupteurs électroniques (30, 31, 32) sont commandés par un dispositif de commande (40), dont les signaux d'entrée sont formés et sont sélectionnés à partir de la tension alternative triphasée de la tension continue de sortie, du courant d'entrée, du courant de sortie et de valeurs de consigne prédéfinies, caractérisé
e) en ce que les interrupteurs électroniques (30, 31, 32) sont intégrés dans le pont à diodes triphasé (17), le pont à diodes triphasé (17) étant formé par des diodes (18 à 20 et 24 à 26) dérivant des bornes (77 à 82) des semi-conducteurs de puissance (61) ; et
f) en ce que les respectivement secondes bornes (33) côté tension alternative des interrupteurs électroniques (30, 31, 32) sont interconnectées en un point neutre, le branchement central (35) des condensateurs (6, 7) montés en série étant relié exclusivement à ce point neutre (33), en dehors des lignes de mesure (47).

2. Dispositif selon la revendication 1, **caractérisé en ce que** les interrupteurs électroniques (30, 31, 32) sont constitués par un montage de série en opposition de deux semi-conducteurs de puissance unidirectionnels et déconnectables avec une diode de marche à vide antiparallèle, par exemple des MOSFET de puissance.

3. Dispositif selon la revendication 1, **caractérisé en ce que** les interrupteurs électroniques (30, 31, 32) sont constitués par un montage antiparallèle de semi-conducteurs de puissance unidirectionnels et déconnectables, par exemple des GTO à blocage symétrique.

4. Dispositif selon l'une quelconque des revendications 1 à 3, **caractérisé en ce qu'**au moins une partie de commutation constituée avec des composants à semi-conducteurs de puissance (101 à 107), qui forment au moins une branche de pont (121), est réalisée sous la forme d'un module semi-conducteur de puissance (120), moyennant quoi on obtient une structure avec de faibles inductances parasites par une disposition appropriée des composants à semi-conducteurs de puissance (101 à 107) et des lignes de liaison (115, 116) courtes et internes au module.

5. Dispositif selon la revendication 4, **caractérisé en ce que**, pour former l'ensemble de la partie de commutation à semi-conducteurs de puissance, trois modules semi-conducteurs de puissance (120) qui représentent chacun une branche de pont (121), sont branchés en parallèle au niveau de la tension continue, moyennant quoi on utilise des éléments de liaison pauvres en inductance qui se composent de larges bandes avec un faible espacement.

6. Procédé de commande et de réglage d'un dispositif pour la conversion d'un système de tension (5) triphasé en une tension continue prédéfinissable et alimentant un utilisateur (39), qui permet d'obtenir une consommation de courant de réseau largement sinusoïdale au moyen d'un pont à diodes triphasé (17) relié à un réseau de tension alternative (2, 3, 4) au moyen d'inductances en amont (8, 9, 10), d'un montage en série de condensateurs (6, 7) soutenant la tension d'utilisateur et au moyen d'interrupteurs électroniques (30, 31, 32), moyennant quoi
- les interrupteurs électroniques (30, 31, 32) sont commandés par un dispositif de commande (40), dont les signaux d'entrée sont formés et sélectionnés à partir de la tension alternative triphasée, de la tension continue de sortie, du courant d'entrée, du courant de sortie et de valeurs de consigne prédéfinissables,
- la formation des signaux d'amorçage amenés aux interrupteurs électroniques (30, 31, 32) au moyen de lignes de commande (50) s'effectue par l'unité de commande selon la fonction d'un réglage à deux boucles de la tension de sortie du dispositif,
- la valeur de consigne de la tension de sortie, prédéfinie par des dispositifs de réglage externes, est comparée au moyen d'un point de comparaison (67) avec la valeur réelle de la tension de sortie amenée par une ligne de signalisation (48) et le résultat de la comparaison est amené à l'entrée d'un élément de réglage (68) et son signal de sortie est utilisé par l'intermédiaire d'un élément de multiplication (69) avec des signaux déduits des tensions de phase de réseau pour calculer les valeurs de consigne du courant de phase de réseau d'une boucle de réglage de courant (66) supportée,
- les différences de réglage des valeurs de consigne du courant de phase sont calculées par un point de comparaison (71) qui enregistre des valeurs réelles de courant au moyen de lignes de signalisation (49) et sont converties par des éléments de commutation d'hystérésis (72) en signaux de commande modulés en largeur au niveau des impulsions,
**caractérisé en ce que** ces signaux de commande sont modifiés par un bloc fonctionnel (53) enregistrant également le signe des tensions simples de réseau de telle façon que, indépendamment du signe des tensions de réseau et en cas de dépassement d'un seuil d'un élément d'hystérésis (72) au cours de la phase spécifique, on procède à une modification de l'état de commutation de l'interrupteur électronique concerné (30, 31, 32) dans le sens d'une réduction au niveau valeur de l'écart de réglage du courant de phase.

7. Procédé selon la revendication 6, **caractérisé en ce que**, pour le réglage du potentiel du centre capacitif de tension de sortie (35) du dispositif (1) avec le réglage du courant d'hystérésis, on superpose à des valeurs de consigne amenées aux éléments de commutation d'hystérésis (72) un signal de décalage identique pour toutes les phases et formé en fonction de la dissymétrie des tensions partielles de sortie, lequel signal prolonge les durées de conduction des interrupteurs électroniques et des phases attribuées en cas de prépondérance de la tension du premier condensateur de sortie (6) par rapport à la tension du deuxième condensateur de sortie (7) pendant les demi-oscillations positives de tension et de courant de phase de réseau, et les raccourcit à l'intérieur des demi-oscillations négatives, et entraîne une réduction de la dissymétrie au moyen de la valeur moyenne apparaissant ainsi du courant envoyé au point (35) commun aux deux condensateurs (6, 7), moyennant quoi on procède à une influence réciproque du courant envoyé de façon résultante dans le point nodal (35) en cas de prépondérance de la tension du deuxième condensateur (7) par rapport à la tension du premier condensateur. (6).
